# EUROPEAN PATENT SPECIFICATION

(11) **EP 3 091 264 B1**
(45) Date of publication and mention of the grant of the patent: **07.10.2020**
(21) Application number: 15166271.5
(22) Date of filing: 04.05.2015
(51) Int. Cl.: F16L 27/10, F01N 13/18, F16L 27/111, F16L 51/02

(54) **VEHICLE WITH FLEXIBLE CONDUIT ELEMENT**
FAHRZEUG MIT FLEXIBLEM LEITUNGSELEMENT
VÉHICULE AVEC ÉLÉMENT DE CONDUITE FLEXIBLE

(43) Date of publication of application: 09.11.2016
(73) Proprietor: Sjm Co., Ltd., Kyungki Province 425-100 (KR)
(72) Inventor: Jae Kwang, Lee, 68163 Mannheim (DE); Webel, Uwe, 76877 Offenbach (DE)
(74) Representative: Grünecker Patent- und Rechtsanwälte PartG mbB

(56) References cited:
- EP-A2- 2 348 205
- WO-A2-2006/138394
- DE-A1-102012 200 397
- DE-A1-102014 105 619
- DE-B3-102011 014 350
- KR-A- 20100 070 062
- KR-B1- 101 280 318

## Description

The invention relates to vehicle with an exhaust gas system, a combustion engine of a vehicle and a flexible conduit element that joins the exhaust gas system and a combustion engine and comprises a bellows member which defines a guiding channel for guiding the exhaust gas of the combustion engine to an exhaust gas system.

A flexible conduit element of the above-mentioned kind is known, for example, from EP 19 08 936 A1. Such a flexible conduit element is usable in a pipe system, such as an exhaust gas system of a vehicle, to provide a flexible joint between two exhaust gas pipes, in particular between the joint of the pipes of the exhaust gas system and the exhaust gas opening of a combustion engine. The flexible conduit element serves as a decoupler joint in the exhaust gas system, and is exposed to heat and vibrations, as well as impact loads, which are caused by vibration of the engine and engine roll when starting the engine during acceleration and braking or gear shifting. Also, road conditions may generate vibration at the exhaust pipe. The flexible conduit element should prevent a transfer of the impact loads, vibrations, etc. to the components which are mounted at the flexible conduit element openings, for example, the combustion engine and the exhaust gas pipes.

Usually, the flexible conduit element is exposed to the environment including different gases and liquids which can corrode the metal parts of the flexible conduit element.

Flexible conduit elements for vehicles according to the preamble of independent claim 1 are disclosed in DE 10 2011 014350 B3 and DE 10 2012 200397 A1.

EP2348205 A2 discloses a body having inner and outer coatings provided on an inner side and an outer side, respectively and made of composite ceramics based on selection and composition of nano particles regarding different parameters. The inner side faces exhaust gas, and the outer side faces away from the exhaust gas, and the inner coating is differently decorated than the outer coating based on the parameters. The coatings comprise a microstructure and individual coating portions, where layer thickness of the coatings is 0.01-0.1 times of wall thickness of the body. The parameters are selected from a group of porosity, surface roughness, layer thickness, coefficient of thermal expansion, heat emission coefficient, elastic module, tensile strength or compression strength

Nanoparticle surface treatments and use of nanoparticle surface treatments to reduce the damaging oxidation and corrosion of stainless steel and other alloy components in oxidating and corrosive conditions is disclosed in WO 2006/138394 A2.

DE 10 2014 105619 A1 discloses a method for protecting at least one metallic surface against discoloration upon exposure to heat, in which the metallic surface is provided with a lacquer which forms a permanently effective oxygen barrier after a stoving process, characterized in that the metallic surface during the stoving process of the lacquer is sealed against oxygen contact.

An object of the present invention is to provide a flexible conduit element which can resist the corroding influences of the environment.

Another object of the present invention is to provide an exhaust gas system having a flexible conduit element which is durable against
The object is solved according to the invention by means of a vehicle with a flexible conduit element comprising the features of claim 1.

According to the invention, the flexible conduit element comprises a bellows member which defines a guiding channel for guiding the exhaust gas of the combustion engine to an exhaust gas system, wherein at least a portion of a side surface of the bellows member comprises a coating with nano-particles including materials for improving the corrosions resistance of the bellows member. The coating with nano-particles is applied on a surface of the bellows-member for example by means of a dispersion unit, such that the coating with nano-particles provides a protection against corrosion, and provides a very smooth surface with a surface roughness in the range of Rₐ = 0.012 µm to 0.8 µm in axial and circumferential direction of the coating.

According to the invention the nano-particles include silicon and/or ceramic. According to an embodiment the nano-particles include basalt. The nano-particles can include heat resistant, air-tightening, and /or damping materials to enhance the durability, functionality and damping effect of the flexible conduit element.

According to an embodiment the coating with nano-particles has a fluid deflecting property.

According to an embodiment the coating with nano-particles is configured such that it provides a chemical, and/or a corrosion protection and/or a temper color effect, in particular at every or at different parts of the flexible conduit element. A temper color effect can be caused by thin film interference due to the coating with nano-particles, in particular, when using ceramics.

According to an embodiment the coating with nano-particles is provided at least at one side of the bellows member, in particular on the side of the bellows member, which is opposite to the guiding channel.

According to an embodiment the coating with nano-particles is located on the side of the bellows member that is facing to the guiding channel of the flexible conduit element, and/or the coating with nano-particles facing to the guiding element has at least partially different structure as the coating with nano-particles facing to the outside of the bellows member.

According to the invention, the coating with nano-particles is provided as a layer which is attached to components of the bellows member by disbursing and / or immersion, having a thickness in the range of 5 µm to 10 µm.

According to an embodiment the coating with nano-particles at least partially covers parts of the bellows member.

According to an embodiment the surface of the bellows member with the applied coating with nano-particles has a surface roughness in the range of 0.012 µm to 0.8 µm.

The invention will now be described by the embodiments depicted in the following Figures. Other and further objects of the invention together with the features of novelty pertaining thereto will be apparent from the following description. The accompanying drawings, which form a part of the specification, are to be read in conjunction therewith and which like reference numerals are used in the headlight or similar parts:

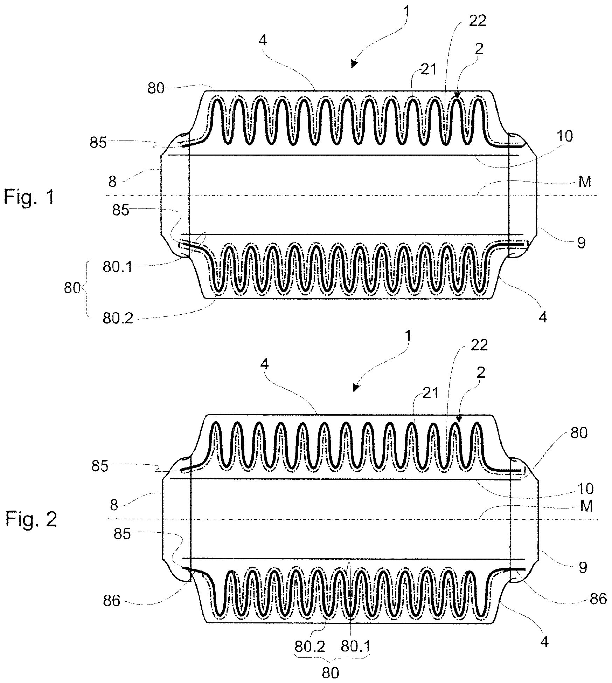

Fig. 1 is a schematic longitudinal sectional view of a first and a second embodiment of a flexible conduit element that forms part of the invention, wherein Fig. 1 shows in the upper half the first embodiment and in the lower half the second embodiments of the flexible conduit element,
Fig. 2 is a schematic longitudinal sectional view of a third and a forth embodiment of the flexible conduit element, wherein the upper half and the lower half respectively shows different embodiments of the flexible conduit element, wherein the bellows member is provided with a coating with nano-particles,

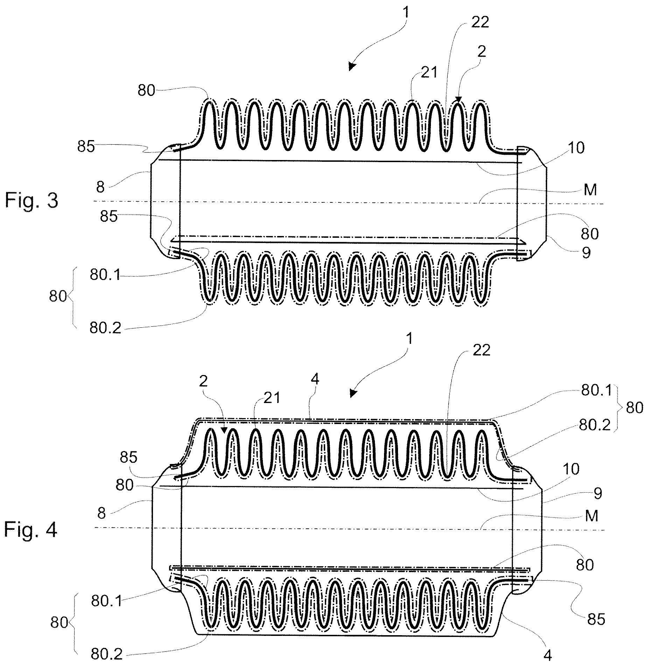

Fig. 3 is a sectional view of a fifth and sixth embodiments of the flexible conduit element comprising a coating with nano-particles, wherein parts of the flexible conduit element can be omitted due to the coating with nano-particles, wherein the upper and the lower half show different embodiments of the flexible conduit element, and
Fig. 4 shows a schematic sectional view of further embodiments of the flexible conduit element, wherein further parts are provided with a coating with nano-particles, wherein the upper half and the lower half of the flexible conduit element shown in Fig. 4, divided by the middle axis M shows different embodiments of the flexible conduit element.

Referring now to Fig. 1 which shows in a schematic sectional longitudinal section view a flexible conduit element 1, defining a guiding channel 10 for guiding a fluid-like exhaust gas to an exhaust gas system, which is generated by a combustion engine.

For mounting the flexible conduit element 1 as a joint between a combustion engine and an exhaust gas system, the same is provided with fixing elements 8 and 9 which fixing elements 8, 9 function as mounting portions and as fixing end portions for the different components of the flexible conduit element.

In Fig. 1, a first and a second embodiment of the flexible conduit element 1 is shown, wherein the respective embodiments are divided by the middle axis M, wherein each half shows an embodiment which is axial symmetric to the middle axis M.

Both embodiments of the flexible conduit element comprise a flexible member 4, which can be manufactured from a woven, or braided metal wire, for setting the dynamic stiffness of the flexible conduit element 1.

Between the guiding 10 and the flexible element, there is provided a bellows member 2 comprising undulation 22 and corrugations 21 and having different radial extensions. Preferably, the guiding 10 includes agrafe-type ring elements. The agrafe-type ring elements provide a high flexibility combined with a certain stiffness to ensure a joint between the exhaust gas system and a combustion engine which provide a high durability and which withstand static and dynamic loads exposed to the flexible conduit element 1.

In the upper half of Fig. 1 the bellows member is provided with a coating with nano-particles 80 on the outside of the bellows member, which is facing to the flexible element 4. The coating with nano-particles 80 can comprise corroding resistant materials, like for example silicon, ceramic and/or noble metals.

Preferably the coating with nano-particles layer comprises also additions which are heat-resistant and resistant to the corrosive effects of exhaust gas and/or other gases and fluids which can act in the exhaust gas system of a vehicle having a combustion engine.

These corrosive and heat-resistive materials are provided on the bellows member with a thickness in the range of about 3 nm right up to 80 microns in a coating-film having a thickness to about 5 to 10 µm, to ensure, that the high flexibility of the bellows member 2 is maintained and the bellows member is provided with a better resistance against the corrosive fluids which can act on the same. Additionally, the nano-coated bellows member 2 can be made of metals which must not be noble metals. The bellows member 2 is protected by the coating 80, 80.1, 80.2 with nano-particles against corrosive fluids. Furthermore, the coating with nano-particles based on ceramic nano-particles can provide, when applied onto the bellows member, a temper color, affected by the heat of the exhaust gas guided through the bellows member.

The lower half of Fig. 1 shows another embodiment of the flexible conduit element, in particular a bellows member 2 which is provided on both sides of the same and with a coating 80.1 and 80.2 with nano-particles, such that the bellows member is completely surrounded by the coating with nano-particles.

The coating 80.2 with nano-particles attached on the outside can have other properties than the coating with nano-particles on the inside of the bellows member 2 facing to the guiding channel 10 of the flexible conduit element 1.

The coating 80.1 with nano-particles facing to the guiding channel 10 can be for example provided with materials which are resistant to heat and gases of corrosive gas components of the exhaust gas, wherein the coating with nano-particles 80.2 facing to the flexible member 4 can be provided with materials resistant to corrosive fluids, like salt water. Additionally, the coating 80, 80.1, 80.2 with nano-particles can comprise a micro structure which allows the exit of vaporized water molecules out of the flexible conduit element 1, but prevents the penetration of liquids form the outside into the flexible conduit element 1.

Figs. 2, 3 and 4 show a further embodiment of the flexible conduit element, wherein the upper half and the lower half images respectively show different embodiments thereof. Each of the embodiments can be combined with each other. Furthermore, the coating 80, 80.1, 80.2 with nano-particles enhances the duration of the flexible conduit element 1 without delimiting the flexibility of the flexible conduit element 1.

The upper half of Fig. 2 shows a half-image of a third embodiment of the flexible conduit element, wherein the inner side of the bellows member 2 facing to the guiding channel 10, is provided with a coating 80 with nano-particles to enhance the resistance of the flexible bellows member 2 against the liquids which may be contained in the exhaust gas of a combustion engine. The coating 80 with nano-particles can comprise materials which make the bellows member 2 air-tight and/or fluid-tight such that gases and/ or fluids contained in the exhaust gas channel cannot escape the flexible conduit element 1.

Further, the coating 80 with nano-particles is configured such that the inside of the bellows member against corrosive gases and fluids of the exhaust gas. The coating 80 with nano-particles can therefore comprise heat resistant and corrosive resistant materials like silicon, ceramic, glass, etc.

The lower half of Fig. 2 shows a bellows member 1, which is provided at its inside and its outside with different coating 80.1, 80.2 with nano-particles.

Additionally, the embodiment of the bellows member 2 shown in the lower half provides a mounting portion 86 which allows a better mounting with the fixing elements 8 and 9. This mounting portion 86 is not coated with the coating 80.1, 80.2 with nano-particles.

Fig. 3 shows further embodiments of the flexible conduit element 1, wherein due to the use of the coating 80, 80.1, 80.2 with nano-particles components of the flexible conduit element can be omitted.

In the upper half of Fig. 3, showing the fifth embodiment of the flexible conduit element 1, the flexible element 4 is omitted such that the flexible conduit element merely comprises the fixing element 8, the guiding 10 and the bellows member 2 comprising a coating with nano-particles 80 which protects the same without disturbing its overall flexibility. Additionally, the flexible coating 80 with nano-particles may be provided with further materials having a certain frequency that the resonance frequency of the bellows member 2 to a certain level to prevent high resonance effect. Furthermore, the coating 80 with nano-particles can be structured to enhance the surface roughness of the bellows-member such that the bellows member 2 has with the coating a surface roughness in the range of 0.8 µm to 0.12 µm.

The lower half of Fig. 3 shows a sixed embodiment of the flexible conduit element 2, wherein the bellows member 2 is provided on both sides with a coating 80.1, 80.2 with nano-particles.

The coating 80.1 and 80.2 with nano-particles can provide different chemical and / or structural properties depending on the side of the flexible conduit element they are facing to.

Fig. 4 shows in the upper and the lower half the seventh and eighth embodiment of the flexible conduit element 2. To enhance the living span of the flexible conduit element 2 further parts of the flexible conduit element 2 are provided with a coating 80, 80.1, 80.2 with nano-particles. For example, the flexible element 4, which is normally made of metal net, can be provided with the coating 80 with nano-particles. The coating comprises nano-particles including ceramics, which ensures a heat and corrosion resistance of the materials coated with that coating of nano-particles. Thus, less bold metals can be used for the bellows member.

In the lower half of Fig. 4, the guiding channel 10 is also provided with the coating 80 having nano-particles to enhance its corrosive resistance against corrosive impacts of the exhaust gas and/or the environment when used in a combustion engine vehicle.

## Claims

1. A vehicle comprising a combustion engine, an exhaust gas system, and a flexible conduit element (1) joining the exhaust gas system and the combustion engine and comprising a bellows member (2) which defines a guiding channel (10) for guiding the exhaust gas of the combustion engine to an exhaust gas system,
**characterized in that**
at least a portion of a side surface of the bellows member (2) comprises a coating (80) with nano-particles including materials for improving the corrosion resistance of the bellows member (2), wherein the coating with nano-particles includes silicon and/or ceramic, and
the coating (80) with nano-particles is provided as a hose and/or layer being attached to components of the bellows member (2) by dispersion and / or immersion and having a thickness in the range of 5 µm to 10 µm.

2. The vehicle according to claim 1, wherein the coating (80) with nano-particles has a fluid deflecting property.

3. The vehicle according to claim 1 or 2, wherein the coating (80) with nano-particles is configured such that it provides a chemical, and/or a corrosion protection and/or a temper color effect, in particular at all or at different parts of the flexible conduit element (1).

4. The vehicle according to any of claims 1 to 3, wherein the coating (80) with nano-particles is provided at least at one side of the bellows member (2), in particular on the side of the bellows member (2) which is opposite to the guiding channel (10).

5. The vehicle according to any of claims 1 to 4, wherein the coating (80.1) with nano-particles is located on the side of the bellows member (2) that is facing to the guiding channel (10) of the flexible conduit element (1), and/or the coating (80.1) with nano-particles facing to the guiding element has at least partially different structure as the coating (80.2) with nano-particles facing to the outside of the bellows member (2).

6. The vehicle according to any of claims 1 to 5, wherein the coating (80) with nano-particles at least partially covers parts of the bellows member (2).

7. The vehicle according to any of claims 1 to 6, wherein the surface of the bellows member (2) with the applied coating (80) with nano-particles has a surface roughness in the range of 0.012 µm to 0.8 µm.

## Patentansprüche

1. Fahrzeug mit einem Verbrennungsmotor, einem Abgassystem und einem flexiblen Leitungselement (1), das das Abgassystem und den Verbrennungsmotor verbindet und ein Balgteil (2) umfasst, das einen Leitkanal (10) zum Leiten des Abgases des Verbrennungsmotors zu einem Abgassystem bildet,
**dadurch gekennzeichnet, dass**
wenigstens ein Abschnitt einer Seitenfläche des Balgteils (2) eine Beschichtung (80) mit Nanopartikeln umfasst, die Materialien zum Verbessern der Korrosionsbeständigkeit des Balgteils (2) enthält, wobei die Beschichtung mit Nanopartikeln Silizium und/oder Keramik enthält, und
die Beschichtung (80) mit Nanopartikeln als ein Schlauch und/oder eine Schicht vorhanden ist, die auf Komponenten des Balgteils (2) mittels Dispersion und/oder Tauchen aufgebracht wird und eine Dicke im Bereich von 5 µm bis 10 µm hat.

2. Fahrzeug nach Anspruch 1, wobei die Beschichtung (80) mit Nanopartikeln eine flüssigkeitsablenkende Eigenschaft hat.

3. Fahrzeug nach Anspruch 1 oder 2, wobei die Beschichtung (80) mit Nanopartikeln so ausgeführt ist, dass sie einen chemischen Schutz und/oder einen Korrosionsschutz und/oder einen Anlass-Farbeffekt, insbesondere an allen oder an verschiedenen Teilen des flexiblen Leitungselementes (1), bewirkt.

4. Fahrzeug nach einem der Ansprüche 1 bis 3, wobei die Beschichtung (80) mit Nanopartikeln wenigstens an einer Seite des Balgteils (2), insbesondere an der Seite des Balgteils (2) vorhanden ist, die dem Leitkanal (10) gegenüberliegt.

5. Fahrzeug nach einem der Ansprüche 1 bis 4, wobei sich die Beschichtung (80.1) mit Nanopartikeln an der Seite des Balgteils (2) befindet, die dem Leitkanal (10) des flexiblen Leitungselementes (1) zugewandt ist, und/oder die Beschichtung (80.1) mit Nanopartikeln, die dem Leitelement zugewandt ist, eine wenigstens teilweise andere Struktur hat als die Beschichtung (80.2) mit Nanopartikeln, die der Außenseite des Balgteils (2) zugewandt ist.

6. Fahrzeug nach einem der Ansprüche 1 bis 5, wobei die Beschichtung (80) mit Nanopartikeln wenigstens teilweise Teile des Balgteils (2) abdeckt.

7. Fahrzeug nach einem der Ansprüche 1 bis 6, wobei die Oberfläche des Balgteils (2) mit der aufgebrachten Beschichtung (80) mit Nanopartikeln eine Oberflächenrauigkeit im Bereich von 0,012 µm bis 0,8 µm aufweist.

## Revendications

1. Véhicule comprenant un moteur à combustion, un système de gaz d'échappement et un élément de conduit flexible (1) reliant le système de gaz d'échappement et le moteur à combustion et comprenant un élément de soufflet (2) qui définit un canal de guidage (10) pour guider le gaz d'échappement du moteur à combustion vers un système de gaz d'échappement,
**caractérisé en ce que**
au moins une partie d'une surface latérale de l'élément de soufflet (2) comprend un revêtement (80) avec des nanoparticules comprenant des matériaux pour améliorer la résistance à la corrosion de l'élément de soufflet (2), dans lequel le revêtement avec des nanoparticules comprend du silicium et/ou de la céramique, et
le revêtement (80) avec des nanoparticules est prévu sous la forme d'un tuyau et/ou d'une couche fixé(e) aux composants de l'élément de soufflet (2) par dispersion et/ou immersion et ayant une épaisseur dans la plage de 5 µm à 10 µm.

2. Véhicule selon la revendication 1, dans lequel le revêtement (80) avec des nanoparticules a une propriété de déviation de fluide.

3. Véhicule selon la revendication 1 ou 2, dans lequel le revêtement (80) avec des nanoparticules est configuré de telle sorte qu'il fournit une protection chimique, et/ou anticorrosion et/ou un effet de couleur de revenu, en particulier au niveau de la totalité ou de différentes parties de l'élément de conduit flexible (1).

4. Véhicule selon l'une quelconque des revendications 1 à 3, dans lequel le revêtement (80) avec des nanoparticules est prévu au moins d'un côté de l'élément de soufflet (2), en particulier du côté de l'élément de soufflet (2) qui est opposé au canal de guidage (10).

5. Véhicule selon l'une quelconque des revendications 1 à 4, dans lequel le revêtement (80.1) avec des nanoparticules est situé du côté de l'élément de soufflet (2) qui fait face au canal de guidage (10) de l'élément de conduit flexible (1), et/ou le revêtement (80.1) avec des nanoparticules faisant face à l'élément de guidage a une structure au moins partiellement différente de celle du revêtement (80.2) avec des nanoparticules faisant face à l'extérieur de l'élément de soufflet (2).

6. Véhicule selon l'une quelconque des revendications 1 à 5, dans lequel le revêtement (80) avec des nanoparticules recouvre au moins partiellement des parties de l'élément de soufflet (2).

7. Véhicule selon l'une quelconque des revendications 1 à 6, dans lequel la surface de l'élément de soufflet (2) avec le revêtement appliqué (80) avec des nanoparticules a une rugosité de surface dans la plage de 0,012 µm à 0,8 µm.
